Europäisches Patentamt

European Patent Office

Office européen des brevets

(19)

(11) Numéro de publication : **0 176 121**
**B1**

(12) **FASCICULE DE BREVET EUROPÉEN**

(45) Date de publication du fascicule du brevet :
14.02.90

(51) Int. Cl.⁵ : **F 41 G   7/22**, H 01 Q   1/42,
G 01 S   3/78

(21) Numéro de dépôt : 85201327.5

(22) Date de dépôt : 19.08.85

(54) Procédé de détection et d'élimination d'images parasites créées par un IR dôme pyramidal.

(30) Priorité : 28.08.84 FR 8413285

(43) Date de publication de la demande :
02.04.86 Bulletin 86/14

(45) Mention de la délivrance du brevet :
14.02.90 Bulletin 90/07

(84) Etats contractants désignés :
BE DE FR GB IT NL SE

(56) Documents cités :
FR--A-- 2 405 562
GB--A-- 1 594 602
GB--A-- 2 071 957
US--A-- 3 445 663
US--A-- 3 535 527
US--A-- 3 940 767

(73) Titulaire : TELECOMMUNICATIONS RADIOELECTRI-
QUES ET TELEPHONIQUES T.R.T.
88, rue Brillat Savarin
F-75013 Paris (FR)
FR
N.V. Philips' Gloeilampenfabrieken
Groenewoudseweg 1
NL-5621 BA Eindhoven (NL)
BE DE GB IT NL SE

(72) Inventeur : Marche, Pierre
SOCIETE CIVILE S.P.I.D. 209 rué de l'Université
F-75007 Paris (FR)

(74) Mandataire : Chaffraix, Jean et al
Société Civile S.P.I.D. 209, rue de l'Université
F-75007 Paris (FR)

EP 0 176 121 B1

Jouve, 18, rue St-Denis, 75001 Paris, France

**Description**

L'invention concerne un procédé de détection et d'élimination d'images parasites créées par le dôme pyramidal à infrarouge d'un autodirecteur infrarouge pour missile non stabilisé en roulis.

L'analyse de la scène située dans le champ de l'objectif concerne des sources telles que par exemple la cible utile, un élément du paysage, un leurre, etc... (origine du premier type).

L'analyse de la scène située en dehors du champ de l'objectif concerne des sources telles que par exemple un élément du paysage (dont le soleil), un leurre, etc... (origine du deuxième type).

Les images que l'on se propose ici d'éliminer sont celles correspondant à une origine du deuxène type, qu'il s'agisse d'éléments du paysage ou de leurres, la distinction entre éléments de paysages et leurres, n'étant pas opérée.

Le remède théorique à la non-création de telles images parasites consiste à effectuer sur la face externe de chaque facette de l'IR dôme un traitement anti-reflet analogue à celui qui est opéré sur les faces internes. Ce remède s'avère pratiquement inefficace du fait que les traitements connus à ce jour ne résistent pas aux contraintes d'environnement subies par l'IR dôme.

On connaît par ailleurs du brevet anglais 2 071 957, un dispositif électronique de détection et d'élimination d'images parasites dont le principe peut être appliqué à l'élimination des images parasites introduites par l'IR dôme pyramidal d'un autodirecteur de missile selon le procédé de l'invention.

Le procédé selon l'invention est remarquable en ce qu'il comporte la formation d'une image d'une scène délimitée par le champ de l'objectif de l'autodirecteur dans le plan focal dudit objectif après transmission à travers le dôme et l'analyse de ladite image avec un balayage-trame de période T dont la valeur est différente d'un multiple de la période de trajectoire définie comme le rapport de la période de rotation en roulis du missile au nombre de facettes dudit dôme, ledit balayage étant obtenu par l'analyse de l'image dans ledit plan focal de l'objectif au moyen d'une barrette de détecteurs infrarouges, l'image de ladite scène formée sur la barrette comportant, superposée à la partie utile correspondant à ladite scène délimitée par le champ de l'autodirecteur, une image parasite correspondant à une scène située en dehors dudit champ et dont le flux transmis à travers l'une des facettes du dôme est réfléchi sur la face externe d'une facette opposée, le procédé comportant en outre la mémorisation des signaux électriques issus desdits détecteurs dans une mémoire de trame, les niveaux des signaux correspondant à des points de la trame de rang N-1 précédant une trame quelconque de rang N étant stockés dans ladite mémoire, la transmission des niveaux des signaux correspondant à deux points d'une même localisation géographique de la scène, l'un sur la trame de rang N à un instant t, l'autre sur la trame de rang N-1 à l'instant t-T, respectivement à l'entrée non inverseuse et à l'entrée inverseuse d'un détecteur différentiel dont la sortie est reliée à travers un opérateur de prise de valeur absolue à une première entrée d'un comparateur, la comparaison du signal présent sur ladite première entrée du comparateur à une tension de seuil de valeur positive appliquée à la seconde entrée dudit comparateur, le signal issu dudit opérateur indiquant l'apparition d'une image parasite si sa valeur est supérieure à ladite valeur de seuil, l'inhibition de la prise en compte de ladite image parasite par le signal de sortie dudit comparateur.

Comme il a déjà été mentionné dans le préambule, ce procédé s'adresse à un missile non stabilisé en roulis. Il s'agit donc d'une aide à l'accrochage en vol, au réaccrochage en vol et à la poursuite.

A condition de limiter la durée élémentaire du traitement à une valeur suffisamment faible (par exemple une période de trame de 5 ms) telle qu'il soit possible de négliger notamment le déplacement du missile (3,5 m à Mach 2), le déplacement relatif cible-missile, le grossissement de la cible (inférieur à un champ élémentaire de 0, 5 m rd pour une cible de diamètre 2 m à la très courte distance de 100 m), les images du premier type restent identiques, alors que les images du deuxième type décrivent une trajectoire pendant le même temps.

La description suivante en regard des dessins annexés, le tout donné à titre d'exemple fera bien comprendre comment l'invention peut être réalisée.

Les valeurs numériques utilisées ci-après sont données à titre indicatif et proviennent d'ordres de grandeur correspondant à une application de ce dispositif à un ADIR à imagerie pour missile sol-air à très courte portée.

La figure 1 représente le schéma de principe du dispositif pour la mise en oeuvre du procédé de l'invention.

La figure 2 représente une trame dans le plan focal de l'objectif.

La figure 3 représente le schéma synoptique du dispositif électronique de détection et d'élimination d'images parasites.

La figure 4a définit le référentiel fixe Oxyz et la facette de réflexion pour la détermination des points génériques de l'image parasite. La figure 4b donne les mêmes définitions dans le plan xOz à l'instant initial.

La figure 5 montre à l'intérieur du missile le positionnement du référentiel fixe par rapport au plan focal de l'objectif.

La figure 6 montre la trajectoire d'une image parasite dans les limites du champ analysé.

La figure 7 définit le référentiel fixe et l'axe de visée dans le cas général où aucune hypothèse n'est faite sur l'existence de l'image parasite à t = 0.

Les éléments correspondants sur ces différentes figures seront désignés par les mêmes signes de référence.

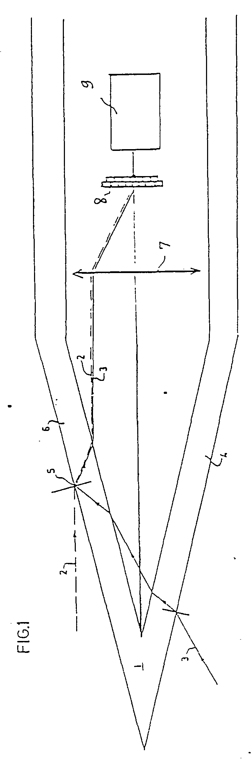

La figure 1 représentant la coupe d'un IR dôme pyramidal 1 par son plan de symétrie montre que le rayonnement transmis peut avoir deux origines :

une origine dite du premier type, indiquée en pointillés 2 sur la figure, lorsqu'il provient d'une source située dans le champ de l'objectif et dont le signal est recueilli dans le plan focal dudit objectif après transmission à travers l'IR dôme ;

une origine dite du deuxième type, indiquée en trait plein 3, lorsqu'il est issu d'une source extérieure au champ de l'objectif mais dont le flux transmis à travers l'une des facettes 4 de l'IR dôme est ensuite réfléchi par la face externe 5 d'une facette opposée 6. Ce rayonnement produit dans le plan focal d'un objectif 7 une image parasite qui se superpose à l'image utile formée sur un détecteur 8 qui traduit le flux qu'il reçoit en un signal électrique. Conformément à l'invention, ce signal est introduit dans un dispositif électronique de détection et d'élimination d'images parasites 9.

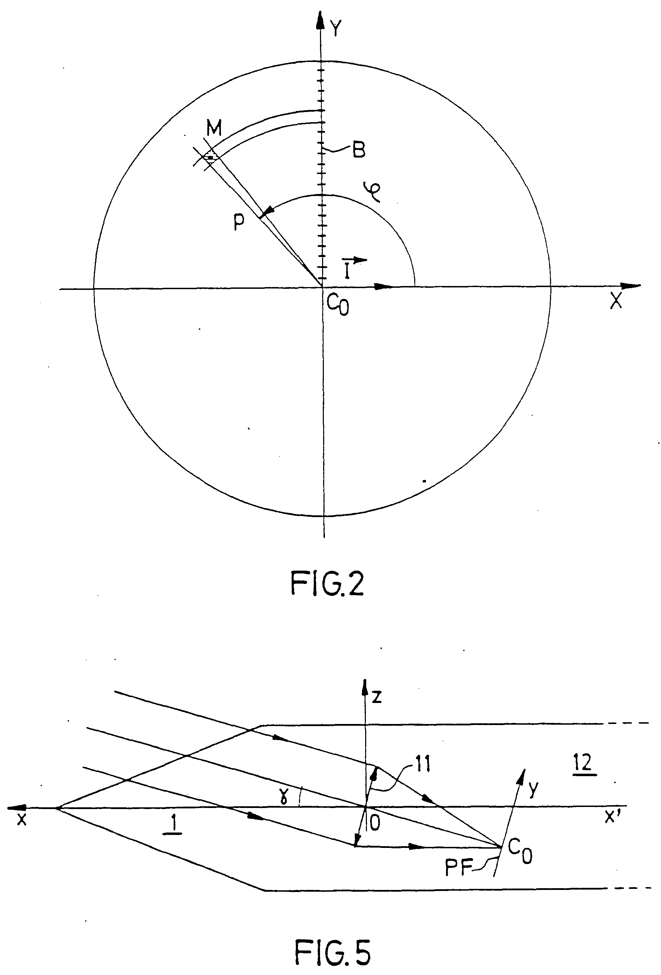

Une analyse complète de la scène délimite le champ de l'autodirecteur selon ses caractéristiques (système optique, détecteurs, mode de balayage). L'image ainsi obtenue dans le plan focal de l'objectif constitue une trame representée sur la figure 2. Les détecteurs infrarouge 8 sont disposés en une barrette B de 32 éléments. Un prisme non représenté tournant au niveau de l'objectif produit la rotation de l'image dans le plan de la scène. Chaque élément détecteur analyse donc une couronne circulaire centrée en Co. Le flux qu'il reçoit est intégré et lu séquentiellement pendant un certain temps selon la vitesse de rotation tous les 1/128 tour. La trame ainsi décomposée en 128 positions successives de la barrette de détecteurs elle-même découpée géographiquement en 32 éléments est formée de 128 fois 32 = 4096 éléments d'image ou pixels (contraction des mots anglais picture elements). L'un de ces éléments est représenté autour du point M de coordonnées polaires $\rho$ et $\varphi$. Si la vitesse du balayage est de 200 t/s, la période de la trame est de 5 ms.

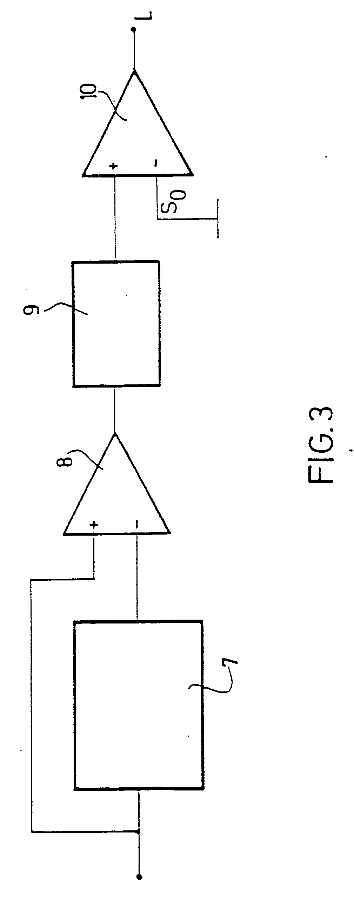

La suppression des images parasites est obtenue au moyen du dispositif électronique 9 dont le schéma synoptique est représenté sur la figure 3.

Les niveaux des signaux correspondant aux différents éléments d'image sur les trames successives sont transmis aux entrées d'un détecteur différentiel 11, par voie directe sur l'entrée non-inverseuse et à travers une mémoire 10 sur l'entrée inverseuse. La mémoire 10 dite mémoire de trame est équivalente à une ligne à retard de longueur égale à la durée d'une période de trame T. La sortie du détecteur différentiel 11 est reliée à travers un opérateur de prise de valeur absolue 12 à une entrée d'un comparateur 13 dont l'autre entrée reçoit une valeur de seuil $S_0$ positive et fonction du niveau de bruit thermique du dispositif ($S_0 = a\sigma$ ; $a > 0$ ; $\sigma$ étant l'écart type du bruit). La sortie du comparateur fournit un signal logique L.

Le traitement est effectué en temps réel. La trame n° N étant analysée et les niveaux des points de la trame précédente n° N — 1 ayant été stockés dans la mémoire de trame 10, le détecteur différentiel 11 effectue la différence point à point entre les niveaux fournis par les trames N et N — 1. Si le point M analysé à l'instant t sur la trame N fournit le niveau S(t), le niveau du même point mis en mémoire était S(t — T) sur la trame N — 1. On calcule donc à l'instant t : $\Delta S(t) = S(t) - S(t - T)$ et la valeur absolue de $\Delta S(t)$ en provenance de 12 est comparée en 13 à la valeur de seuil $S_0$. Si l'on a $|\Delta S(t)| \geq S_0$, il y a au point M variation de signal entre la trame N — 1 et la trame N, ce qui indique l'apparition d'une image parasite. Le signal logique L = 1 issu de cette comparaison va servir à inhiber la prise en compte de cette information.

La condition selon laquelle toute évolution entre deux trames consécutives (avec une période trame de faible valeur) caractérise une image parasite (origine du deuxième type) est une condition suffisante. Cela peut ne pas être une condition nécessaire.

En effet, compte tenu de la périodicité de la rotation en roulis d'une part, de la périodicité de l'analyse trame d'autre part, une image parasite peut présenter la même trajectoire lors de deux trames consécutives.

Ce phénomène est rencontré lorsque la période d'analyse est un multiple de la « période trajectoire », ce qui se traduit par :

$$[\text{E1}] \quad T = k/n_f\omega$$

avec T : période d'analyse ou durée trame

$n_f$ : nombre de facettes de l'IR dôme

$\omega$ : vitesse de roulis

k : entier lié à la trame N.

Pour l'application numérique suivante :

T = 5 ms ; $n_f$ = 8 ; 5 $\leq \omega \leq$ 15 tours/s, ce qui fournit 0,2 $\leq$ k $\leq$ 0,6, on vérifie qu'il n'existe pas de valeur entière de k satisfaisant l'équation [E1]. Donc le phénomène précité ne risque pas de se produire.

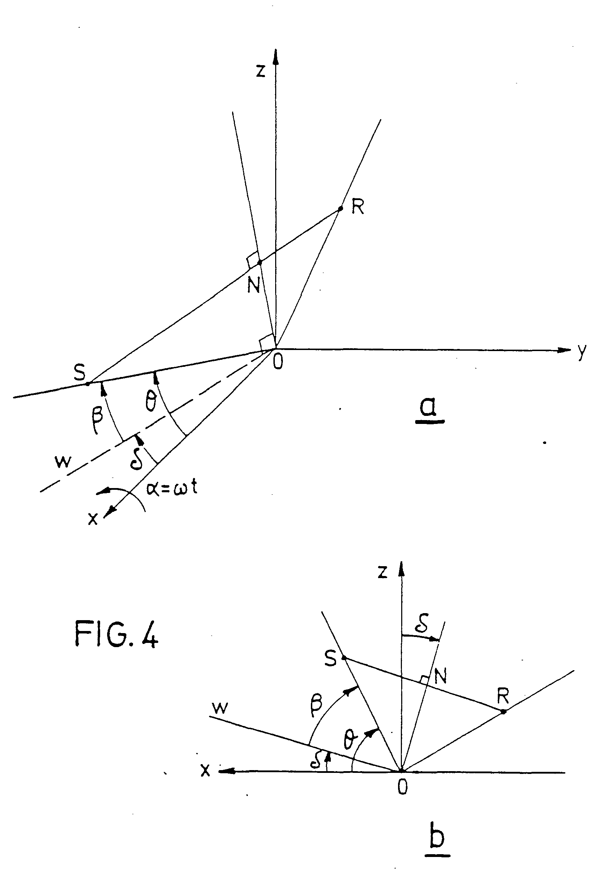

La durée élémentaire du traitement étant limitée à une valeur faible de l'ordre de la période trame, on a indiqué ci-dessus que les images du second type décrivent une trajectoire dont on se propose de calculer les expressions. A cet effet, on supposera que la trame est stabilisée en roulis, c'est-à-dire que les informations de luminances sont adressées dans un référentiel fixe lié au sol. Sur le plan pratique, cela résulte de l'utilisation d'un gyroscope de roulis et de la compensation électronique de l'adressage effectué dans un repère lié au missile. Le choix de l'orientation des axes est alors plus important que celui de l'origine qui peut être arbitraire. La figure 4a donne la définition de ce référentiel représenté en perspective :

L'axe x'Ox est l'axe du missile (Ox étant dirigé vers l'avant).

L'axe z'Oz est l'axe vertical du missile à t = 0 (Oz étant dirigé vers le haut).

L'axe y'Oy est le troisième axe de coordonnées du référentiel, Oxyz étant fixe dans l'espace (stabilisé en roulis).

On définit également sur la figure 4a la facette de réflexion ainsi que les directions des rayons incident et réfléchi.

A l'instant initial, le plan facette de réflexion est défini par deux droites : l'axe y'Oy et la droite Ow, intersection du plan xOz avec un plan parallèle à la facette de l'IR dôme sur laquelle le rayonnement provenant de la source parasite est réfléchi. La droite Ow fait un angle $\delta$ avec l'axe x'Ox.

Lorsque le missile est animé d'un mouvement de roulis, ce plan facette de réflexion tourne d'un angle $\alpha = \omega t$ autour de l'axe x'Ox.

La direction du faisceau incident est donnée par la droite OS qui fait dans le plan xOz un angle $\beta$ avec la facette.

Dans le système de référence Oxyz,

le point générique S du rayon incident OS a pour coordonnées :

$$x_S = A\cos\theta, \quad y_S = 0, \quad z_S = A\sin\theta$$

avec $\theta = \beta + \delta$ et $A = OS$ : paramétre ;

le point générique N de la normale ON au plan de réflexion $\overrightarrow{SN}$ étant perpendiculaire à $\overrightarrow{ON}$ a pour coordonnées :

$$x_N = - B \sin \delta, \quad y_N = - B \cos \delta \sin \alpha, \quad z_N = B \cos \delta \cos a,$$

avec $B = A (\cos \delta \cdot \sin \theta \cdot \cos \alpha - \sin \delta \cdot \cos \theta)$ ;

le point générique R du rayon réfléchi OR Intersection de ce rayon avec $\overrightarrow{SN}$ a pour coordonnées :

$$x_R, \quad y_R, \quad z_R,$$

avec $x_R = A \cdot A_1, \quad y_R = A \cdot A_2, \quad z_R = A \cdot A_3$

où $A_1$, $A_2$ et $A_3$ sont des fonctions des lignes trigonométriques de $\delta$, $\beta$, et $\alpha$.

La figure 4b montre les définitions ci-dessus dans le plan xOz à l'instant initial.

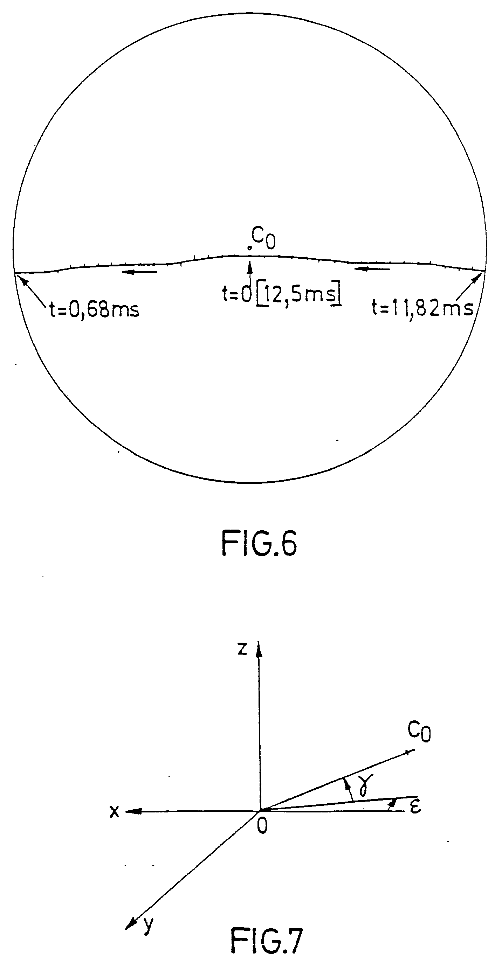

Afin de faciliter les calculs, le centre O de référentiel fixe Oxyz est positionné au centre du système optique de l'autodirecteur. Sur la figure 5, ce système optique est représenté d'une manière simplifiée par une lentille 11 située dans le corps du missile 14 attenant à l'IR dôme pyramidal 1. Soit $\gamma$ l'angle de visée c'est-à-dire le débattement de la tête de l'autodirecteur ou dans la représentation simplifiée de la figure, l'angle de l'axe optique de la lentille 11 avec l'axe x'Ox du missile. $C_0$ étant le centre du champ dans le plan focal image PF à la distance F du centre O du référentiel, on suppose pour fixer les idées qu'à l'instant initial, l'image se trouve sur l'axe vertical $C_0Y$ de symétrie dudit plan, l'axe horizontal $C_0X$ étant parallèle à Oy (voir également figure 2). Le plan focal ainsi défini est adressé en coordonnées polaires $\rho$, $\varphi$ avec $0 \leqslant \rho \leqslant 31$ et $0 \leqslant \varphi \leqslant 127$ ($\rho = 0$ au centre du champ, $\rho = E[$distance au centre $| P]$ et $\varphi = E[128/2 \pi \times$ angle en radians$]$) ; dans ces expressions $E[x]$ représente la fonction « arrondi entier de x » et $P = 62,5 \mu m$ le pas entre deux éléments détecteurs de la barrette.

Les coordonnées de $C_0$ dans le référentiel Oxyz sont :

$$xC_0 = - F \cos \gamma, \quad yC_0 = 0, \quad zC_0 = F \sin \gamma$$

L'équation du plan focal PF est donnée par :

$$(PF) : x \cos \gamma - z \sin \gamma + F = 0$$

La relation entre le paramètre A qui intervient dans les expressions des coordonnées du point générique refléchi R et la focale F est obtenue en écrivant que R appartient à PF. Cela fournit :

$$A = \frac{F}{A_3 \sin \gamma - A_1 \cos \gamma}$$

Dans le référentiel Oxyz de vecteurs de base $\overrightarrow{i}, \overrightarrow{j}$ et $\overrightarrow{k}$, le vecteur $\overrightarrow{C_0R}$ a pour composantes :

(Voir formule page 5)

4

$$\vec{C}_0 R \begin{cases} A \cdot A_1 \cdot F \cos \gamma \\ A \cdot A_2 \\ A \cdot A_3 - F \sin \gamma \end{cases}$$

Dans le plan focal, dont les vecteurs directeurs sont $\vec{I} = \vec{j}$ et $\vec{J} = \sin \gamma \, \vec{i} + \cos \gamma \, \vec{k}$, les composantes de $C_0 R$ sont :

$$X_R = A \cdot A_2$$
$$Y_R = A \cdot (A_1 \sin \gamma + A_3 \cos \gamma)$$

Ainsi les coordonnées polaires d'une image parasite R dans le plan focal PF s'écrivent :

$$\rho_R = E \left[ \sqrt{(x_R^2 + Y_R^2)}/P \right]$$

$$\varphi_R = E \left[ \frac{128}{2\,\pi} \varphi_R' \right]$$

avec $\varphi_R'$ tel que

$$\begin{cases} \sin \varphi_R' = \dfrac{Y_R}{\rho_R} \\[2mm] \cos \varphi_R' = \dfrac{X_R}{\rho_R} \end{cases}$$

La trace d'une trajectoire d'image parasite dans le plan focal est donnée sur la figure 6 avec les valeurs de paramètres :

$$\theta = 28^\circ, \; \beta = 14^\circ \text{ à } t = 0 \text{ et } \gamma = 0{,}05^\circ.$$

On voit que l'image parasite située à $t = 0$ sur l'axe vertical de symétrie du plan focal revient à sa position initiale au bout de 12,5 ms soit 2,5 trames. De $t = 0{,}68$ ms à $t = 11{;}82$ ms, l'image parasite se trouve hors du champ analysé.

Les trames correspondantes résultent de l'échantillonnage de ces trajectoires par la barrette de détecteurs infrarouge animée d'un mouvement de balayage « type polaire ».

Dans le cas général on ne fait, à priori, aucune hypothèse sur l'existence de l'image parasite à l'instant initial. Le plan focal est défini comme le plan perpendiculaire à l'axe de visée représenté sur la figure 7 et donné par son site $\gamma$ (compté positivement vers le haut) et son azimut $\varepsilon$ (compté dans le sens trigonométrique dans le plan horizontal) et tel que le point $C_0$ (centre du champ) soit à la distance F de l'origine 0.

La direction de l'axe de visée est donnée par le vecteur $\vec{OC_0}$ de composantes :

$$\vec{OC_0} \begin{cases} - F \cos \gamma \cos \varepsilon \\ - F \cos \gamma \sin \varepsilon \\ F \sin \gamma \end{cases}$$

L'équation du plan focal est alors donnée par :

$$(PF) : \cos \gamma \cos \varepsilon \, x + \cos \gamma \sin \varepsilon \, y - \sin \gamma \, z + F = 0.$$

La relation entre le paramètre A et la focale F obtenue comme précédemment en décrivant que R appartient à PF devient :

$$A = \frac{F}{A_3 \sin \gamma - A_1 \cos \gamma \cos \varepsilon - A_2 \cos \gamma \sin \varepsilon}$$

Dans le trièdre Oxyz de vecteurs de base $\vec{i}$, $\vec{j}$ et $\vec{k}$, le vecteur $\vec{C_0 R}$ a pour composantes :

$$\vec{C}_0 R \begin{vmatrix} A \cdot A_1 + F \cos \gamma \cos \varepsilon \\ A \cdot A_2 + F \cos \gamma \sin \varepsilon \\ A \cdot A_3 - F \sin \gamma \end{vmatrix}$$

Dans le plan focal dont les vecteurs directeurs sont : $\vec{I} = - \sin \varepsilon \; \vec{i} + \cos \varepsilon \; \vec{j}$ et

$$\vec{J} = \sin \gamma \cos \varepsilon \; \vec{i} + \sin \gamma \cos \varepsilon \; \vec{j} + \cos \gamma \; \vec{k},$$

les composantes de $\vec{C}_0 R$ sont :

$$X_R = A(A_2 \cos \varepsilon - A_1 \sin \varepsilon)$$
$$Y_R = A(A_1 \sin \gamma \cos \varepsilon + A_2 \sin \gamma \sin \varepsilon + A_3 \cos \gamma)$$

Les expressions des coordonnées polaires $\rho_R$ et $\varphi_R$ de l'image parasite R restent celles indiquées ci-dessus.

## Revendication

Procédé de détection et d'élimination d'images parasites créées par le dôme pyramidal à infrarouge d'un autodirecteur infrarouge pour missile non stabilisé en roulis, le procédé étant caractérisé en ce qu'il comporte la formation d'une image d'une scène délimitée par le champ de l'objectif de l'autodirecteur dans le plan focal dudit objectif après transmission à travers le dôme et l'analyse de ladite image avec un balayage-trame de période T dont la valeur est différente d'un multiple de la période de trajectoire définie comme le rapport de la période de rotation en roulis du missile au nombre de facettes dudit dôme, ledit balayage étant obtenu par l'analyse de l'image dans ledit plan focal de l'objectif au moyen d'une barrette de détecteurs infrarouges, l'image de ladite scène formée sur la barrette comportant, superposée à la partie utile correspondant à ladite scène délimitée par le champ de l'autodirecteur, une image parasite correspondant à une scène située en dehors dudit champ et dont le flux transmis à travers l'une des facettes du dôme est réfléchi sur la face externe d'une facette opposée, le procédé comportant en outre la mémorisation des signaux électriques issus desdits détecteurs dans une mémoire de trame, les niveaux des signaux correspondant à des points de la trame de rang N-1 précédant une trame quelconque de rang N étant stockés dans ladite mémoire, la transmission des niveaux des signaux correspondant à deux points d'une même localisation géographique de la scène, l'un sur la trame de rang N à un instant t, l'autre sur la trame de rang N-1 à l'instant t-T, respectivement à l'entrée non inverseuse et à l'entrée inverseuse d'un détecteur différentiel dont la sortie est reliée à travers un opérateur de prise de valeur absolue à une première entrée d'un comparateur, la comparaison du signal présent sur ladite première entrée du comparateur à une tension de seuil de valeur positive appliquée à la seconde entrée dudit comparateur, le signal issu dudit opérateur indiquant l'apparition d'une image parasite si sa valeur est supérieure à ladite valeur de seuil, l'inhibition de la prise en compte de ladite image parasite par le signal de sortie dudit comparateur.

## Claim

A method of detecting and eliminating parasitic images created by the pyramidal IR dome of an infrared auto-director for a missile which is not roll-stabilised, the method being characterized in that it comprises the formation of an image of a scene delimited by the field of the objective of the auto-director in the focal plane of the said objective after transmission across the dome and the analysis of the said image with a frame scan of period T whose value differs by a multiple of the path period defined as the ratio between the roll rotation period of the missile and the number of facettes of the said dome, said scan being obtained by the analysis of the image in said focal plane of the objective by means of a row of infrared detectors, the image of said scene formed on the row containing, superposed on the useful portion corresponding to said scene delimited by the field of the auto-director, a parasitic image corresponding to a scene located outside said field and whose flux, transferred across one of the facettes of the dome is reflected from the exterior face of an opposite facette, the method furthermore comprising the storage in a frame memory of electric signals emitted by the said detectors, the levels of the signals corresponding to elements of the frame of the order N-1 preceding any frame of the order N being stored in the said memory, the transfer of the levels of the signals corresponding to two elements of the same geographical localization, one on the frame of order N at an instant t, the other on the frame of order N-1 at the instant t-T, at the non-inverting and at the inverting input, respectively, of a differential detector whose output is connected to a first input of a comparator via an absolute-value calculating device, the comparison of the signal present at the said first input of the comparator to a positive-value threshold voltage applied to the second input of the said comparator, the signal supplied by the said calculating device indicating the appearance of a parasitic image if its value exceeds said threshold value, and to inhibit the taking into account of the said parasitic image by the output signal of the said comparator.

**Patentanspruch**

Verfahren zur Detektion und Eliminierung von von der pyramidenförmigen IR-Kuppel eines automatischen IR-Feuerleit-Rechengerätes für nicht-querstabilisierte Flugkörper erzeugten unerwünschten Bildern, dadurch gekennzeichnet, daß das Verfahren folgendes umfaßt: das Erzeugen eines Bildes einer durch das Feld des Objektivs des automatischen Feuerleit-Rechengerätes beschränkten Szene in der Brennebene des genannten Objektivs nach Übertragung durch die Kuppel hindurch und das Analysieren des genannten Bildes mit einer Teilbildabtastung der Periode T, deren Wert von einem Mehrfachen der als das Verhältnis der Periode der Querdrehung des Flugkörpers zu der Anzahl Fazetten der genannten Kuppel bezeichneten Bahn abweicht, wobei die genannten Abtastung durch die Analyse des Bildes in der genannten Brennebene des Objektivs mittels einer Schiene mit IR-Detektoren erhalten wird, wobei das an der Schiene erzeugte Bild der genannten Szene ein parasitärens Bild enthält, das dem nützlichen Teil überlagert ist, das der genannten durch das Feld des automatischen Feuerleit-Rechengerätes beschränkten Szene entspricht, wobei dieses parasitäre Bild einer Szene entspricht, die ausserhalb des genannten Feldes liegt und dessen quer durch eine der Fazetten der Kuppel übertragener Fluß an der Außenfläche einer gegenüberliegenden Fazette reflektiert wird, wobei das Verfahren außerdem die folgenden Schritte umfasst: die Speicherung der von den Detektoren gelieferten elektrischen Signale in einem Teilbildspeicher, wobei die Pegel der Signale, die Punkten des Teilbildes der Ordnung N-1 entsprechen, das jedem beliebigen Teilbild der Ordnung N vorhergeht, in dem genannten Speicher gespeichert werden; die Übertragung der Pegel der Signale, die zwei Punkten desselben geographischen Ortes der Szene entsprechen, der eine in den Teilbild der Ordnung N zu dem Zeitpunkt t, der andere in dem Teilbild der Ordnung N-1 zu dem Zeitpunkt t-T an dem nicht-invertierten bzw. dem invertierten Eingang eines differentiellen Detektors, dessen Ausgang über eine Absolutwert-Meßanordnung mit einem ersten Eingang einer Vergleichsanordnung gekoppelt ist, das Vergleichen des an dem ersten Eingang der Vergleichsanordnung vorhandenen Signals mit einer dem zweiten Eingang der genannten Vergleichsanordnung zugeführten Schwellenspannung positiven Wertes, wobei das von der genannten Meßanordnung gelieferte Signal das Auftreten eine parasitären Bildes angibt, wenn der gemessene Wert den genannten Schwellenwert überschreitet, und das Verhindern der Berücksichtigung des parasitären Bildes durch das Ausgangssignal der genannten Vergleichsanordnung.

FIG.1

FIG.2

FIG.5

FIG.3

FIG. 4

*a*

*b*

EP 0 176 121 B1

FIG.6

FIG.7